Europäisches Patentamt

European Patent Office

Office européen des brevets

(11) Publication number: **0 323 014 B1**

# EUROPEAN PATENT SPECIFICATION

(45) Date of publication of patent specification: **19.08.92**  (51) Int. Cl.⁵: **B60J 1/02**

(21) Application number: **88310588.4**

(22) Date of filing: **10.11.88**

(54) **Window positioning system.**

(30) Priority: **28.12.87 US 138110**

(43) Date of publication of application:
**05.07.89 Bulletin 89/27**

(45) Publication of the grant of the patent:
**19.08.92 Bulletin 92/34**

(84) Designated Contracting States:
**DE FR GB**

(56) References cited:
**EP-A- 0 323 048**
**DE-A- 3 442 903**
**DE-C- 3 602 198**
**FR-A- 2 485 655**
**US-A- 4 179 859**

(73) Proprietor: **FORD MOTOR COMPANY LIMITED**
**Eagle Way**
**Brentwood Essex CM13 3BW(GB)**

(84) Designated Contracting States:
**GB**

(73) Proprietor: **FORD FRANCE S. A.**
**B.P. 307**
**F-92506 Rueil-Malmaison Cédex(FR)**

(84) Designated Contracting States:
**FR**

(73) Proprietor: **FORD-WERKE AKTIENGESELL-
SCHAFT**
**Werk Köln-Niehl Henry-Ford-Strasse Post-
fach 60 40 02**
**W-5000 Köln 60(DE)**

(84) Designated Contracting States:
**DE**

(72) Inventor: **Harris, Charles Franklin, Jr.**
**479 Courtland**
**Ypsilanti Michigan 48197(US)**

(74) Representative: **Messulam, Alec Moses et al**
**A. Messulam & Co. 24 Broadway**
**Leigh on Sea Essex SS9 1BN(GB)**

Rank Xerox (UK) Business Services

## Description

The present invention relates generally to systems and devices for positioning non-movable glass panes in automotive vehicle bodies. The invention relates more specifically for positioning systems for such glass panes which are at least in part surrounded by a molding having a stiff carrier portion for engaging the glass and a more pliable overlying decorative portion for covering the interface between the glass pane and the vehicle body.

In assembling glass panes into flanges formed around apertures in vehicle bodies, a significant manufacturing problem lies in the compensation for variations in clearances between the associated parts. In the assembly of modern motor vehicle bodies, the primary means of fixing glass panes to the body is through the application of an adhesive in rabbet flanges formed about the window apertures. While such adhesives are effective in retaining the glass to the body, they generally require a significant amount of time to cure and attain sufficient strength to retain the glass effectively. Since the adhesive is applied during the assembly process of the vehicle and the vehicle body is moving along an assembly line, attention has necessarily been given to maintaining the position of the glass through means other than the primary adhesive during that curing time. A common approach in solving this problem is that exemplified in US-A-3,851,433 to Colucci which provides for a metallic clip forming a channel for receiving the edge of a pane of glass, the clip being fixedly secured by appropriate mechanical fastening means to the vehicle body and a decorative molding being attached to the clip along the interface between the glass pane and the body. Positioning systems of this type suffer certain disadvantages, however. They require direct contact between the positioning fastener and the glass which is not desirable for glass systems in which a modularized construction is used in assembling retaining and decorative moldings to the glass prior to installation in the vehicle. They also are disadvantageously limited in their ability to compensate for peripheral clearance tolerances between the glass panel and the body. US-A-4,135,277 to Taniai et al and US-A-4,147,005 to Meyer disclose other such positioning devices for directly engaging and positioning glass panes.

Responsive to the deficiencies in the prior art, it is object of the present invention to provide for the accurate tolerance compensating positioning of a glass pane in the aperture of an automotive vehicle body during the setting of an adhesive at assembly.

According to the present invention, there is provided a positioning system for securing a pane of glass adapted to be adhesively attached to an automotive vehicle body during hardening of the adhesive, the system including an assembly having a channel for receiving the peripheral edge of the glass pane characterised in that the assembly includes a stiff plastic carrier member including said channel for receiving the peripheral edges of the glass pane, and the system further includes a plurality of tufted strips secured to the body in juxtaposition with at least one peripheral edge of the glass pane, the strips having rows of spaced, knobbed projections extending toward the glass pane edge, and means defining a locking projection extending outwardly from a side of the channel of the carrier member perpendicularly from the glass pane juxtaposed edge and lockingly receivable between the rows of knobbed projections

Further developments or embodiments in line with claim 1 are referred to in the dependent claims.

The invention will now be described further, by way of example, with reference to the accompanying drawings, in which :

Figure 1 is a partial rear perspective view of an automobile showing its rear window,

Figure 2 is an enlarged perspective view partially in cross-section taken along lines II-II of Figure 1 illustrating in an exploded fashion the assembly of the window of Figure 1.

Figure 3 is an exploded perspective view similar to Figure 2 showing in cross section taken along lines III-III of Figure 1 the installation of the window of Figure 1 against another positioning device,

Figure 4 is an enlarged partial cross-sectional view showing the assembled position of the window with respect to the positioning clip of Figure 2,

Figure 5 is an enlarged cross-sectional view showing the assembled position of the window with respect to the positioning device of Figure 3.

Fig. 6 is a front view of the positioning device of Fig. 4;

Fig. 7 is a top view of the positioning device of Fig. 6; and

Fig. 8 is a cross-sectional view taken along lines VIII-VIII of Fig. 6.

Turning now to the drawings, an automotive vehicle 10 is illustrated as including a rear window 12 which comprises a glass pane 14 surrounded by a molding assembly 16. In the embodiment illustrated in the drawings, the vehicle 10 includes a body 18 formed as a metal stamping including a rabbet flange 20 formed about the periphery of the body aperture for the window 12. It will be appreciated by those skilled in the automotive body arts that other materials, such as plastics, may be chosen for formation of the body 18 and manufacturing processes other than metal stamping might likewise be used without losing the positioning benefit of the system of the present invention.

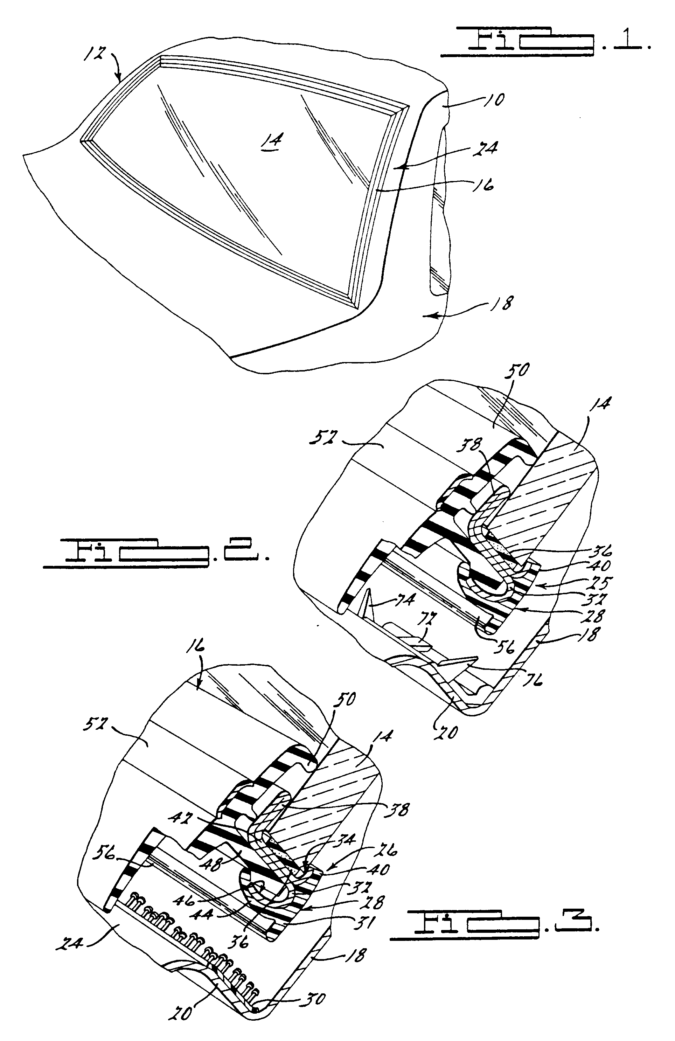

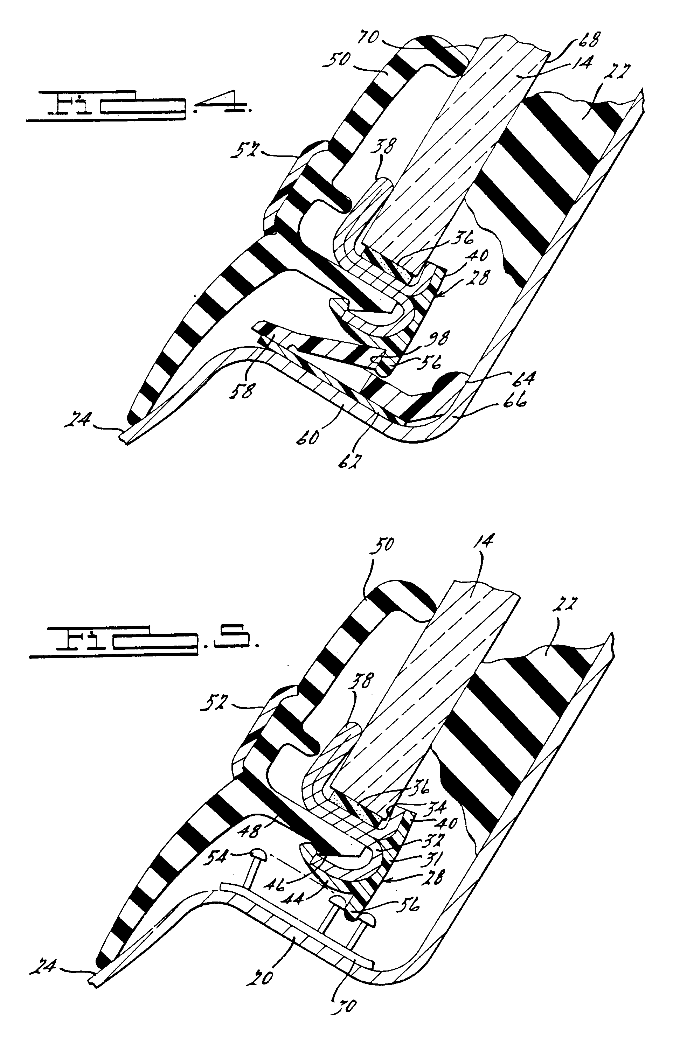

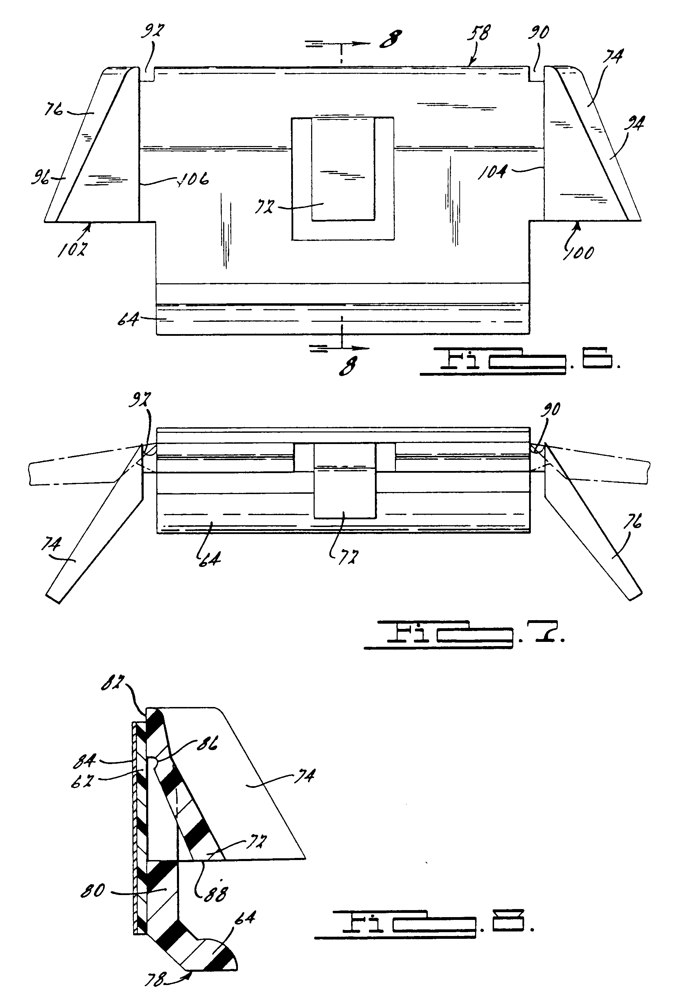

The glass pane 14 is secured to the rabbet flange 20 of the vehicle body 18 through application of an adhesive 22, as may best be seen in Figs. 4 and 5. To accurately position the glass pane 14 with respect to outer surfaces of the vehicle body 18, such as indicated at 24, the positioning devices shown in Fig. 2 and Fig. 3 are utilized. It is to be understood that while the positioning devices of Figs. 2 and 3 are illustrated as being positioned at the rabbet flange 20 extending across the bottom surface of the window 12, replications of either or both of the positioning devices of Figs. 2 and 3 may be utilized at other peripheral edges. The use of such positioning devices at at least the top of the window 12, together with those placed at the bottom, is desirable for accurate positioning. The positioning devices of either or both types may also be used on the sides of the window 12. In the environment of an automotive assembly plant, it has been found particularly effective to utilize positioning devices of the type shown in Fig. 3 at the bottom of the window 12 and positioning devices of the type shown in Fig. 2 at the top and in some assemblies, at the top and sides.

Turning now to Figs. 2-5, a window positioning system arranged on a vehicle according to the present invention and utilizing its components is shown in more detail. Figs. 3 and 5 illustrate one positioning assembly in position just prior to assembly of the window 12 into the vehicle 10 and after that assembly, respectively. A positioning assembly 26 is illustrated as comprising an improved molding assembly 28 and a tufted locking strip 30. The improved molding 28 constitutes a modification of a two-piece molding assembly commercially available in the automotive industry. It consists essentially of a hard plastic carrier 31 which may be co-extruded with a metallic stiffener 32 to form a channel 34 for accepting the glass pane 14. An adhesive layer 36 deposited in the channel 34 secures the carrier 31 to the glass pane 14 in a manufacturing process accomplished remote from the assembly line for the vehicle 10. The channel 34 is bounded by side walls 38, 40 for engaging the glass pane 14 and by a wall 42 on which the adhesive 36 is deposited. Spaced from the wall 42 is a lip 44 projecting from an extension of the wall 40 in cantilever fashion to define a gripping recess 46 into which is lockingly inserted a rib 48 of a soft plastic decorative molding 50. The decorative molding 50 extends between the glass pane 14 and outer surface 24 of the body 18 and may itself be coextruded with a metallic strip such as indicated at 52 to present a pleasing exterior appearance.

The tufted strip 30 is of known design fabricated from plastic and suitably secured to the rabbet flange 20. Flexible knobbed projections 54 on the strip 30 cooperate with juxtaposed surfaces of the molding 30 to resist outward movement of the glass pane 14 after assembly to the position of Figure 5. In the improved construction embodying the present invention, an extended locking rib 56 of the wall 32 on the inner side of the glass pane 14 provides a stiff locking member which is adaptable for use both with the locking strips 30 and with the new positioning device illustrated in Figures 2 and 4.

The positioning assembly 25 of the Figure 2 embodiment, therefore, makes use of an identical molding assembly 28 with a new positioning clip 58 which more positively and accurately restrains and limits outward movement of the glass pane 14 with respect to the body 18 than the tufted strip 30 of the Figure 3 embodiment. The clip 58 also provides for peripheral tolerance compensation. The clip 58 is formed as a unitary moulded plastic part that is adhesively secured to a wall 60 of the rabbet flange 20 in a suitable manner such as through the application of a pressure sensitive adhesive tape indicated at 62. The clip 58 includes a foot 64 for engaging a wall 66 of the body 18 which is illustrated as being essentially parallel to the major planar surfaces 68, 70 of the glass pane 14. It also comprises a central locking tab 72 and a pair of flexible locking wings 74, 76.

Figs. 6-8 illustrate the construction of the new clip 58 in more detail. The foot portion of 64 includes a flat mounting surface 78 for abutting a corresponding surface on wall 66 of the vehicle body 18. A flat base portion 80 extends perpendicularly to the mounting surface 78 and includes a flat outer surface 82 to which the tape 62 may be applied. For convenient assembly, a tape utilizing a release paper 84 may be employed. Extending outwardly from the base portion 80 proximate its center is the canted central locking tab 72 which has a cross-sectional reduction to form a hinge point 86 where it extends from the base portion 80 and which includes a flat bottom surface 88 at its free end. Flanking the central locking tab are the locking wings 74, 76. They are connected to the base portion 80 to permit pivotal movement, as may best be seen in Fig. 7, through the formation of hinge points 90, 92, respectively. The swingable movement of the wings 74, 76 of the clip 58 provides for the accommodation of a relatively wide range (approximatley 8mm) in peripheral clearance tolerances between opposed surfaces (top to bottom or side to side) of the aperture and the window 12. In assembling the window 12 into the automobile body 18 from the position shown in Fig. 2 to that shown in Fig. 4, the locking rib 56 of the molding assembly 28 engages canted outer surfaces 94, 96 of the wings 74, 76 to urge them to pivot outwardly from the solid line position of Fig. 7 to the dotted line position.

It has been found advantageous in some automotive assembly applications to use a positioning system that utilizes both the positioning assembly 25 of Fig. 2 and the positioning assembly 26 of Fig. 3 to efficiently and economically provide for holding of the window 12 during passage of the automobile 10 down the assembly line. In this assembly process, the window 12 is provided with the two-piece molding 28 installed and secured around its periphery. The layer of adhesive 22 is applied to a portion of the rabbet flange 20 extending peripherally around the window 12. The window 12 is then brought into contact with the adhesive layer 22 and its inward movement with respect to the vehicle body 18 is resisted in part by that adhesive layer 22. The weight of the window 12 urges it downwardly into a position below that shown in Fig. 5 in which the rib 56 of the molding 28 is engaged between rows of tufts 54 of the locking strip 30. Clips 58 are positioned in the rabbet flange 20 at the top edge of the window 12 and movement of this top edge toward the adhesive layer 22 results in the locking rib 56 of the molding assembly 28 engaging the canted surfaces 94, 96 of the wings 74 and 76 to swing them outwardly and allow passage of the locking rib 56. When the outer surface 98 of the rib 56 passes below the flat surface 88 of the central locking tab 72 and coplanar corresponding flat lower surfaces 100, 102 of the wings 74, 76, the wings 74, 76 flex outwardly and return inwardly due to their flexible plastic construction and assist in restraining outward movement of the window 12 with respect to the body 18. The central locking tabs 72 likewise flexes inwardly and snaps out to retain the locking rib 56, but provision of this locking surface alone would not provide the wide range of tolerance accommodation afforded by the present clip 58. The inwardly tapered canted wings 72, 74 as can best be seen in Fig. 7, extend substantially inwardly beyond the innermost extent of the locking tab 72 to accommodate a wider range of peripheral spacing tolerances. It will be appreciated that their generally triangular construction provides bending connections 104, 106 adjacent their hinge points 90, 92 that yield the resistance to outward movement of the window 12 not readily attainable in the construction of the locking tab 72 in which the tab 72 is cantilevered about its lateral axis.

Other combinations in the use and positioning of the clip 58 and the associated components here disclosed, such as the tufted strip 30 and the improved molding assembly 28, may be possible without departing from the scope of the appended claims.

## Claims

1. A positioning system for securing a pane (14) of glass adapted to be adhesively attached to an automotive vehicle body during hardening of the adhesive, the system including an assembly (28) having a channel (31) for receiving the peripheral edge of the glass pane (14) characterised in that the assembly (28) includes a stiff plastic carrier member (31) including said channel (34) for receiving the peripheral edges of the glass pane (14), and the system further includes a plurality of tufted strips (30) secured to the body in juxtaposition with at least one peripheral edge of the glass pane, the strips having rows of spaced, knobbed projections (54) extending toward the glass pane edge, and means defining a locking projection (56) extending outwardly from a side of the channel of the carrier member (31) perpendicularly from the glass pane (14) juxtaposed edge and lockingly receivable between the rows of knobbed projections (54).

2. A positioning system as claimed in Claim 1, wherein the channel (34) is a U-shaped member having inner and outer side walls for engaging the inner and outer faces of the glass pane (14) and the locking projection is formed integrally with one side of the wall.

3. A positioning system as claimed in Claim 2, wherein the one side wall is the inner side wall.

4. A positioning system as claimed in any one of Claims 1 to 3, wherein the locking projection (56) is a rib formed peripherally coextensive with the carrier member (31).

5. A positioning system as claimed in claim 1, including a plurality of positioning clips (58) carried on portions of the body in juxtaposition with at least the top edge of the glass pane (14) and including means (72) for receiving the locking projection (56) in snap-fit relationship to positively retain the glass pane (14) against outward movement with respect to the body.

6. A positioning system as claimed in Claim 5, wherein the locking projection (56) is a rib formed peripherally coextensive with the carrier member (31), and the receiving means (72) includes means for compensating for variations in peripheral clearance between the glass pane edges and the juxtaposed portions of the body.

7. A positioning system as claimed in Claim 6, wherein the positioning clip's compensating means comprises members (74,76) engageable with the rib and operative upon movement of the glass pane (14) toward the body into adhesive engagement therewith to permit further inward movement and upon certain inward movement operative to restrict outward movement.

**Patentansprüche**

1. Positioniersystem zur Befestigung einer Glasscheibe (14), die so ausgeführt ist, daß sie während des Aushärtens des Klebers anhaftend an einer Kraftfahrzeugkarosserie befestigt werden kann, wobei das System eine Einheit (28) mit einem Kanal (34) zur Aufnahme der Umfangskante der Glasscheibe (14) umfaßt, dadurch gekennzeichnet, daß die Einheit (28) ein steifes Kunststoffträgerelement (31) mit dem genannten Kanal (34) zur Aufnahme der Umfangskanten der Glasscheibe (14) umfaßt, und wobei das System weiterhin eine Vielzahl von Noppenstreifen (30) umfaßt, die an der Karosserie in nebeneinanderliegender Anordnung zu zumindest einer Umfangskante der Glasscheibe befestigt sind, wobei die Streifen Reihen aus mit Abstand angeordneten, noppenförmigen Ansätzen (54) aufweisen, die in Richtung auf die Glasscheibenkante verlaufen, und wobei Vorrichtungen vorgesehen sind, die einen Verriegelungsansatz (56) definieren, der sich, ausgehend von einer Seite des Kanals des Trägerelementes (31), senkrecht zur daneben verlaufenden Kante der Glasscheibe (14) nach außen erstreckt und zwecks Verriegelung zwischen den Reihen aus noppenförmigen Ansätzen (54) aufgenommen werden kann.

2. Positioniersystem nach Anspruch 1, wobei der Kanal (34) als U-förmiges Element ausgebildet ist, das innere und äußere Seitenwände zwecks Eingriff in die inneren und äußeren Stirnseiten der Glasscheibe (14) umfaßt, und wobei der Verriegelungsansatz einstückig mit einer Seite der Wand ausgebildet ist.

3. Positioniersystem nach Anspruch 2, wobei es sich bei der einen Seitenwand um die innere Seitenwand handelt.

4. Positioniersystem nach einem der Ansprüche 1 bis 3, wobei es sich bei dem Verriegelungsansatz (56) um eine Rippe handelt, die zusammen mit dem Trägerelement (31)über den Umfang verlaufend ausgebildet ist.

5. Positioniersystem nach Anspruch 1, umfassend eine Vielzahl von Positionierklammern (58), die an Abschnitten der Karosserie in nebeneinanderliegender Anordnung zu zumindest der oberen Kante der Glasscheibe (14) angebracht sind, wobei Vorrichtungen (72) vorgesehen sind, die den Verriegelungsansatz (56) in eng einrastender Weise aufnehmen, um so die Glasscheibe (14) vor einer im Verhältnis zur Karosserie nach außen gerichteten Bewegung zu sichern.

6. Positioniersystem nach Anspruch 5, wobei es sich bei dem Verriegelungsansatz (56) um eine Rippe handelt, die zusammen mit dem Trägerelement (31) über den Umfang verlaufend ausgebildet ist, und wobei die Aufnahmevorrichtung (72) Vorrichtungen für den Ausgleich von Schwankungen im Umfangsabstand zwischen den Glasscheibenkanten und den daneben angeordneten Abschnitten der Karosserie umfaßt.

7. Positioniersystem nach Anspruch 6, wobei die Positionierklammernausgleichsvorrichtung Elemente (74, 76) umfaßt, die in die Rippe eingreifen können und bei einer Bewegung der Glasscheibe (14) in Richtung auf die Karosserie zur Herstellung eines Klebeeingriffes bewirken, daß eine weitere, nach innen gerichtete Bewegung ermöglicht und bei einer gewissen, nach innen gerichteten Bewegung eine nach außen gerichtete Bewegung eingeschränkt wird.

**Revendications**

1. Système de positionnement pour fixer une vitre (14) de verre prévue pour être fixée de manière adhésive à une carrosserie de véhicule automobile pendant le durcissement de l'adhésif, le système comportant un ensemble (28) ayant un canal (31) pour recevoir le bord périphérique de la vitre de verre (14) caractérisé en ce que l'ensemble (28) comporte un élément de support en matière plastique rigide (31) comportant ledit canal (34) pour recevoir les bords périphériques de la vitre de verre (14) et le système comporte de plus une pluralité de bandes tuftées (30) fixées à la carrosserie en juxtaposition avec au moins un bord périphérique de la vitre de verre, les bandes comportant des rangées de projections espacées à pommeau (54) s'étendant vers le bord de la vitre de verre et un moyen définissant une saillie de blocage (56) s'étendant vers l'extérieur à partir d'un côté du canal de l'élément de support (31) perpendiculairement à partir du bord juxtaposé de la vitre de verre (14) et recevable de manière blocable entre les rangées des projections à pommeau (54).

2. Système de positionnement selon la revendication 1, dans lequel le canal (34) est un élément en forme de U comportant des parois latérales intérieure et extérieure pour mettre en prise les faces intérieure et extérieure de la vitre de verre (14) et la saillie de blocage est formée solidairement avec un côté de la paroi.

3. Système de positionnement selon la revendication 2, dans lequel la paroi latérale est la paroi latérale intérieure.

4. Système de positionnement selon l'une quelconque des revendications 1 à 3, dans lequel la saillie de blocage (56) est une nervure formée périphériquement de manière coextensive avec l'élément de support (31).

5. Système de positionnement selon la revendication 1, comportant une pluralité de colliers de positionnement (58) supportes sur des parties de la carrosserie en juxtaposition avec au moins le bord supérieur de la vitre de verre (14) et comportant un moyen (72) pour recevoir la saillie de blocage (56) en liaison par encliquetage pour maintenir nettement la vitre de verre (14) contre le déplacement vers l'extérieur par rapport à la carrosserie.

6. Système de positionnement selon la revendication 5, dans lequel la saillie de blocage (56) est une nervure formée coextensive de manière périphérique avec l'élément de support (31) et le moyen de réception (72) comporte un moyen pour compenser les variations dans les jeux périphériques entre Tes bords de la vitre de verre et les parties juxtaposées de la carrosserie.

7. Système de positionnement selon la revendication 6, dans lequel le moyen de compensation des colliers de positionnement comprend des éléments (74, 76) qui peuvent s'engager avec la nervure et fonctionnels sur déplacement de la vitre de verre (14) vers la carrosserie en prise adhésive avec celle-ci pour permettre un déplacement ultérieur vers l'intérieur et sur un certain déplacement vers l'intérieur fonctionnels pour limiter le déplacement vers l'extérieur.

FIG.4.

FIG.5.

Fig. 6.

Fig. 7.

Fig. 8.